# EUROPÄISCHE PATENTSCHRIFT

(11) **EP 3 279 566 B1**
(45) Veröffentlichungstag und Bekanntmachung des Hinweises auf die Patenterteilung: **29.04.2020**
(21) Anmeldenummer: 17183701.6
(22) Anmeldetag: 28.07.2017
(51) Int. Cl.: F23N 5/14, F23D 3/40, B60H 1/22, F23Q 7/06

(54) **VERFAHREN ZUM BETREIBEN EINES BRENNSTOFFBETRIEBENEN FAHRZEUGHEIZGERÄTES**
METHOD FOR OPERATING A FUEL-DRIVEN VEHICLE HEATING DEVICE
PROCÉDÉ DE FONCTIONNEMENT D'UN APPAREIL DE CHAUFFAGE À COMBUSTIBLE POUR VÉHICULE

(30) Priorität: 03.08.2016 DE 102016114315
(43) Veröffentlichungstag der Anmeldung: 07.02.2018
(73) Patentinhaber: Eberspächer Climate Control Systems GmbH & Co. KG, 73730 Esslingen (DE)
(72) Erfinder: Pfister, Wolfgang, 73732 Esslingen (DE); Blaschke, Walter, 73779 Deizisau (DE)
(74) Vertreter: Ruttensperger Lachnit Trossin Gomoll

(56) Entgegenhaltungen:
- EP-A2- 1 493 969
- WO-A1-2004/082971
- DE-C1- 19 936 729

## Beschreibung

Die vorliegende Erfindung betrifft ein Verfahren zum Betreiben eines brennstoffbetriebenen Fahrzeugheizgerätes während einer Startphase des Verbrennungsbetriebs. Ein derartiges Fahrzeugheizgerät weist im Allgemeinen einen Brennerbereich auf, in welchem eine Brennkammer ausgebildet ist. Durch eine Brennstoffzuführanordnung wird Brennstoff in den Brennerbereich bzw. dessen Brennkammer gespeist. Durch eine Verbrennungsluftzuführanordnung wird die zum Bilden eines zündfähigen bzw. verbrennungsfähigen Gemisches von Luft und Brennstoff erforderliche Luft in den Brennerbereich bzw. dessen Brennkammer gespeist.

Die DE 10 2005 004 359 A1 offenbart ein Fahrzeugheizgerät mit einem Brennerbereich, dessen topfartiges Brennkammergehäuse mit einer Umfangswandung und einem Bodenbereich eine Brennkammer umgrenzt. Der Bodenbereich ist von einem porösen Verdampfermedium überdeckt. Über eine in den Bodenbereich einmünde Brennstoffleitung wird flüssiger Brennstoff vermittels einer Brennstoffzuführanordnung in das poröse Verdampfermedium eingespeist. Die zur Verbrennung erforderliche Luft wird vermittels einer Verbrennungsluftzuführanordnung durch in der Umfangswandung vorgesehene Öffnungen in die Brennkammer eingeleitet. Ein zum Starten der Verbrennung, also zum Zünden eines Brennstoff/Luft-Gemisches vorgesehenes Zündorgan ist an der Umfangswandung getragen und erstreckt sich in geringem Abstand zu dem porösen Verdampfermedium ausgehend von der Umfangswandung in die Brennkammer.

Die DE 10 2004 025 772 A1 offenbart ein Verfahren zum Betreiben eines derartigen brennstoffbetriebenen Fahrzeugheizgerätes in einer Startphase des Verbrennungsbetriebs. In dieser Startphase wird für die Leistung, also die auch der Heizleistung entsprechende elektrische Leistung eines Zündorgans, eine Soll-Leistung vorgegeben und das Zündorgan in einem Leistungsregelungs-Betriebsmodus betrieben, so dass eine Ist-Leistung im Bereich der Soll-Leistung liegt. Dabei wird mit Erzeugung des Startbefehls, also eines die Inbetriebnahme des Fahrzeugheizgerätes fordernden Befehls, die Soll-Leistung zunächst auf einen etwas niedrigeren Wert gesetzt, der gewährleistet, dass der durch das Zündorgan fließende elektrische Strom einen Grenzwert nicht überschreiten kann. Nach Ablauf einer vorbestimmten Zeitdauer wird die Soll-Leistung erhöht, um bei entsprechend höherer Leistung bzw. Heizleistung eine möglichst schnelle Erwärmung des Zündorgans auf seine Soll-Betriebstemperatur zu erreichen. Anschließend wird die Heizleistung wieder verringert, also eine etwas geringere Soll-Leistung vorgegeben, welche gewährleisten soll, dass auch bei dann startender Verbrennung und somit durch die Flamme in das Zündorgan eingetragener Wärme dieses bei einem im Wesentlichen stationären Temperaturzustand im Bereich seiner Soll-Betriebstemperatur verbleibt. Ein Verfahren gemäß dem Oberbegriff des Anspruchs 1 ist aus der DE 199 36 729 C1 bekannt.

Es ist die Aufgabe der vorliegenden Erfindung, ein Verfahren zum Betreiben eines brennstoffgasbetriebenen Fahrzeugheizgerätes vorzusehen, welches einen effizienten Betrieb eines zum Starten der Verbrennung zu erregenden Zündorgans bei verringerter Gefahr einer thermischen Überlastung des Zündorgans gewährleistet.

Erfindungsgemäß wird diese Aufgabe gelöst durch ein Verfahren gemäß Anspruch 1 zum Betreiben eines brennstoffbetriebenen Fahrzeugheizgerätes während einer Startphase des Verbrennungsbetriebs, wobei das Fahrzeugheizgerät einen Brennerbereich mit einer Brennkammer, eine Brennstoffzuführanordnung zum Zuführen von Brennstoff zu dem Brennerbereich, eine Verbrennungsluftzuführanordnung zum Zuführen von Verbrennungsluft zu dem Brennerbereich sowie wenigstens ein elektrisch erregbares Zündorgan zum Zünden eines in der Brennkammer gebildeten Brennstoff/Luft-Gemisches umfasst, wobei das Verfahren die Maßnahmen umfasst:
a) Erregen des Zündorgans in einer Vorwärmphase, vor Beginn der Brennstoffzufuhr,
b) bei Eintritt in eine auf die Vorwärmphase folgende Zündphase, Erfassen des elektrischen Widerstandes des Zündorgans und Bestimmen eines Soll-Widerstandes auf der Grundlage des bei Eintritt in die Zündphase erfassten elektrischen Widerstandes des Zündorgans,
c) in der Zündphase, Betreiben des Zündorgans in einem Widerstandsregelungs-Betriebsmodus derart, dass ein Ist-Widerstand des Zündorgans auf einem dem bei der Maßnahme b) bestimmten Soll-Widerstandes des Zündorgans entspechenden Wert gehalten wird.

Das erfindungsgemäße Verfahren ist dadurch gekennzeichnet, dass die Brennstoffzuführanordnung in der Vorwärmphase eine vorbestimmte Zeitdauer vor Eintritt in die Zündphase aktiviert wird zum Fördern von Brennstoff zu dem Brennerbereich.

Bei dem erfindungsgemäßen Verfahren wird zunächst vor dem Eintritt in die Zündphase durch Betreiben des Zündorgans in einer Vorwärmphase dieses möglichst schnell in Richtung zu seiner für den Zündvorgang angestrebten Betriebstemperatur gebracht. Mit Eintritt in die Zündphase, also zu einem Zeitpunkt, zu dem das Zünden des in einer Brennkammer vorhandenen bzw. zu bildenden Gemisches zu erwarten ist oder kurz bevorsteht, wird zunächst der elektrische Widerstand des Zündorgans ermittelt und beispielsweise gleichzeitig oder mit zeitlicher Verzögerung in einen Betriebsmodus übergegangen, der gewährleistet, dass der elektrische Widerstand des Zündorgans im Bereich des Soll-Widerstandes verbleibt. Da der elektrische Widerstand des Zündorgans eindeutig verknüpft ist mit der Temperatur des Zündorgans, wird somit gewährleistet, dass auch die Temperatur des Zündorgans im Bereich einer dem Soll-Widerstand zugeordneten Temperatur verbleibt. Eine in der Brennkammer einsetzende Verbrennung, die zu einem zusätzlichen Wärmeeintrag in das Zündorgan führt, wird bei der erfindungsgemäßen Vorgehensweise automatisch dadurch berücksichtigt, dass bei Durchführung der Widerstandsregelung dann, wenn durch derartigen externen Energieeintrag die Temperatur des Zündorgans konstant gehalten werden kann oder grundsätzlich ansteigen würde, die elektrische Leistung, also die Heizleistung des Zündorgans entsprechend verringert wird, so dass die Temperatur des Zündorgans im Wesentlichen konstant gehalten werden kann.

Somit wird es möglich, das Zündorgan in der Vorwärmphase möglichst nahe an die für den Zündvorgang angestrebte Temperatur heranzuführen, welche nur geringfügig unter der für ein derartiges Zündorgan maximal zulässigen Temperatur liegen kann, da bei Übergang in den Widerstandsregelung-Betriebsmodus eine weitergehende Erwärmung des Zündorgans auch bei einsetzender Verbrennung ausgeschlossen wird. Das Zündorgan kann also in der Zündphase nahe an seinem Leistungsmaximum betrieben werden, ohne dass die Gefahr einer thermischen Überlastung besteht.

Bei der erfindungsgemäßen Vorgehensweise wird die Brennstoffzuführanordnung eine vorbestimmte Zeitdauer vor Eintritt in die Zündphase aktiviert zum Fördern von Brennstoff zu dem Brennerbereich. Dies bedeutet im Sinne der vorliegenden Erfindung, dass zunächst die Brennstoffzuführanordnung aktiviert wird, um Brennstoff zu fördern, und erst mit zeitlicher Verzögerung dazu in den Widerstandsregelungs-Betriebsmodus des Zündorgans übergegangen wird. Diese zeitliche Verzögerung bzw. die Zeitdauer, um welche die Brennstoffzuführanordnung vor dem Übergang in den Widerstandsregelungs-Betriebsmodus aktiviert wird, sollte so gewählt werden, dass gewährleistet ist, dass bei Übergang in den Widerstandsregelung-Betriebsmodus und damit auch Festlegen des Soll-Widerstandes eine Verbrennung in der Brennkammer im Wesentlichen noch nicht gestartet wurde.

Um das Zündorgan vor der Zündphase möglichst schnell in Richtung der für den Zündvorgang angestrebten Temperatur bringen zu können, wird vorgeschlagen, dass bei der Maßnahme a) das Zündorgan in der Vorwärmphase in einem Leistungsregelungs-Betriebsmodus betrieben wird.

Dabei kann beispielsweise bei der Maßnahme a) für die Vorwärmphase wenigstens eine Soll-Leistung für das Zündorgan vorgegeben wird und in der Vorwärmphase das Zündorgan derart betrieben wird, dass eine Ist-Leistung im Bereich der Soll-Leistung ist.

Gemäß einem besonderen vorteilhaften Aspekt des erfindungsgemäßen Verfahrens kann weiter vorgesehen sein, dass in der Zündphase die Ist-Leistung des Zündorgans mit einer Referenz-Leistung verglichen wird, und dass dann, wenn die Ist-Leistung im Bereich der Referenz-Leistung ist oder unter die Referenz-Leistung fällt, eine Verbrennung in der Brennkammer erkannt wird. Entsteht in der Brennkammer eine Flamme und tritt somit eine Verbrennung auf, wird Verbrennungswärme in das Zündorgan eingetragen. Da durch die Widerstandsregelung das Zündorgan auf im Wesentlichen konstanter Temperatur gehalten wird, wird entsprechend diesem externen Energieeintrag die Heizleistung des Zündorgans gesenkt. Dieses Absenken der Heizleistung bzw. der elektrischen Leistung des Zündorgans kann beobachtet werden, um durch Vergleich mit einer dafür vorgegebenen Referenz darauf schließen zu können, dass in der Brennkammer die Verbrennung tatsächlich gestartet wurde. Dies kann beispielsweise als Anlass dafür genommen werden, das Erregen des Zündorgans zu beenden, da ein ausreichender externer Energieeintrag in das Zündorgan indiziert, dass die Flamme bzw. die Verbrennung in der Brennkammer sich stabilisiert hat und ein weiteres Betreiben des Zündorgans daher nicht erforderlich ist.

Die vorliegende Erfindung betrifft ferner ein brennstoffbetriebenes Fahrzeugheizgerät, umfassend einen Brennerbereich mit einer Brennkammer, eine Brennstoffzuführanordnung zum Zuführen von Brennstoff zu dem Brennerbereich, eine Verbrennungsluftzuführanordnung zum Zuführen von Verbrennungsluft zu dem Brennerbereich sowie wenigstens ein elektrisch erregbares Zündorgan zum Zünden eines in der Brennkammer gebildeten Brennstoff/Luft-Gemisches, ferner umfassend eine Ansteueranordnung zum Ansteuern des Zündorgans, der Brennstoffzuführanordnung und der Verbrennungsluftzuführanordnung, wobei die Ansteueranordnung zur Durchführung eines erfindungsgemäßen Verfahrens ausgebildet und konfiguriert ist.

Dabei kann beispielsweise der Brennerbereich ein topfartiges Brennkammergehäuse mit einem von einem porösen Verdampfermedium wenigstens bereichsweise überdeckten Bodenbereich und einer Umfangswandung umfassen, wobei das Zündorgan an der Umfangswandung getragen ist und sich in Abstand von dem porösen Verdampfermedium in die Brennkammer, vorzugsweise im Wesentlichen parallel zu einer der Brennkammer zugewandten Seite des porösen Verdampfermediums, erstreckt.

Da bei derartiger Ausgestaltung eines Brennerbereichs nur ein vergleichsweise kleiner Anteil der durch Zündorgan bereitgestellten Wärmeenergien tatsächlich in das poröse Verdampfermedium eingetragen wird und einerseits die Brennstoffabdampfung aus diesem unterstützt, andererseits auch in diesem Bereich dazu beiträgt, Zündbedingungen zu schaffen, ist es besonders vorteilhaft, das Zündorgan unter Anwendung des erfindungsgemäßen Verfahrens sehr nahe an seiner maximal zulässigen Betriebstemperatur betreiben zu können und somit ausreichend Energie zum Starten der Verbrennung in die Brennkammer in vergleichsweise kurzer Zeit eintragen zu können.

Die vorliegende Erfindung wird nachfolgend mit Bezug auf die beiliegenden Figuren detailliert beschrieben. Es zeigt:
- Fig. 1: in prinzipartiger Darstellung ein brennstoffbetriebenes Fahrzeugheizgerät;
- Fig. 2: aufgetragen über der Zeit t, die Temperatur T im Bereich eines Zündorgans.

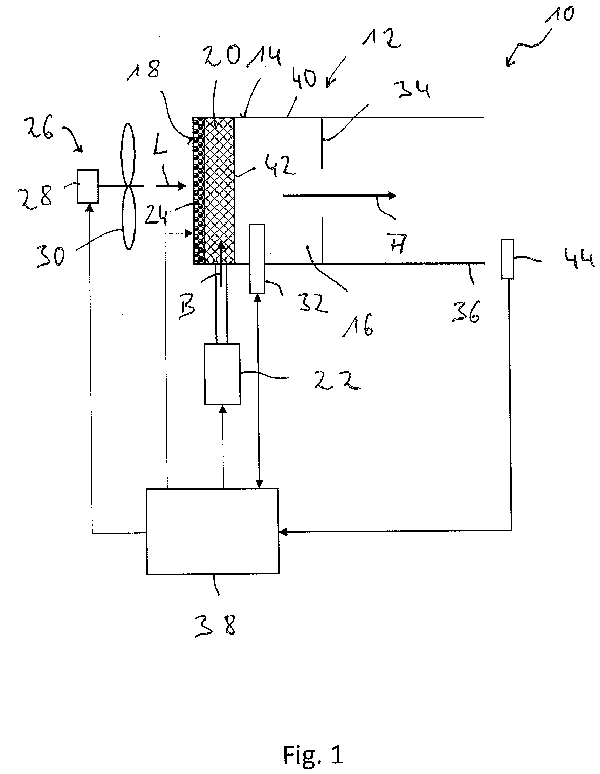

In Fig. 1 ist ein beispielsweise als Standheizung oder/und als Zuheizer in einem Fahrzeug einsetzbares, brennstoffbetriebenes Heizgerät allgemein mit 10 bezeichnet. Das Fahrzeugheizgerät 10 umfasst einen Brennerbereich 12 mit einem Brennkammergehäuse 14, in welchem eine Brennkammer 16 gebildet ist. Beispielsweise an einem Bodenbereich 18 des Brennkammergehäuses 14 ist ein poröses Verdampfermedium 20 vorgesehen, in welches durch eine Brennstoffzuführanordnung 22, beispielsweise eine Dosierpumpe, flüssiger Brennstoff B aus einem nicht dargestellten Brennstoffreservoir eingespeist wird. An der von der Brennkammer abgewandten Rückseite des porösen Verdampfermediums 20 kann eine elektrisch erregbare Heizanordnung 24 vorgesehen sein, welche insbesondere in der Startphase zur Unterstützung der Abdampfung von Brennstoff B aus dem porösen Verdampfermedium 20 in Richtung zur Brennkammer 16 betrieben werden kann.

Zur Bereitstellung des in der Brennkammer 16 zu verbrennenden Gemisches aus Brennstoff B und Verbrennungsluft L ist eine allgemein mit 26 bezeichnete Verbrennungsluftzuführanordnung, beispielsweise ein Seitenkanalgebläse, vorgesehen. Die Verbrennungsluftzuführanordnung 26 umfasst einen Gebläsemotor 28 und ein die Verbrennungsluft L in Richtung zur Brennkammer 16 förderndes Förderrad 30.

Um das bei Betreiben der Brennstoffzuführanordnung 22 und der Verbrennungsluftzuführanordnung 26 gebildete Gemisch in der Brennkammer 16 zu zünden, ist ein Zündorgan 32, beispielsweise ein Glühzündstift, vorgesehen. Dieses wird insbesondere in der Startphase durch elektrische Erregung betrieben, um lokal, also im Bereich der Umgebung des Zündorgans 32, Zündbedingungen zu schaffen. Die bei der Verbrennung in der Brennkammer 16 entstehenden Verbrennungsabgase A treten aus der Brennkammer 16 im Bereich einer Flammblende 34 aus und in ein Flammrohr 36 ein. Dieses ist in seinem von der Brennkammer 16 abgewandten Endbereich offen, so dass die heißen Verbrennungsabgase A in thermische Wechselwirkung mit einer in Fig. 1 nicht dargestellten Wärmetauscheranordnung treten können. Beim Ausströmen aus der Wärmetauscheranordnung können die Verbrennungsabgase A einen beispielsweise als Temperatursensor ausgebildeten Flammfühler 44 umströmen, welcher ein die Temperatur des Abgasstroms wiedergebendes und somit einen Rückschluss auf den Verbrennungszustand zulassendes Ausgangssignal liefert.

Die Brennstoffzuführanordnung 22, die Verbrennungsluftzuführanordnung 26 und das Zündorgan 32 stehen unter der Ansteuerung einer Ansteueranordnung 38. Diese steuert bzw. regelt den Betrieb dieser Systembereiche während der Startphase und während des normalen Verbrennungsbetriebs durch Erzeugen entsprechender Ansteuersignale bzw. durch Anlegen von für den Betrieb dieser Systembereiche erforderlichen Betriebsspannungen. Dabei kann insbesondere das Zündorgan 32 derart angesteuert werden, dass an dieses eine mit einem Tastverhältnis getaktete Erregungsspannung angelegt wird, welche beruhend auf der durch ein Bordspannungsnetz bereitgestellten Bordspannung generiert wird. Durch Variation des Tastverhältnisses wird die mittlere bzw. effektive Spannung und damit auch die bei Anlegen einer derartigen Spannung bereitgestellte elektrische Leistung bzw. die Heizleistung des Zündorgans 32 variiert. Dabei kann die elektrische Leistung bzw. die Heizleistung auf der Grundlage der mittleren bzw. effektiven Spannung und des dabei durch das Zündorgan 32 fließenden elektrischen Stroms ermittelt werden. Gleichermaßen kann der von der Temperatur des Zündorgans 32 abhängige elektrische Widerstand desselben auf der Grundlage der mittleren bzw. effektiven Spannung und des durch das Zündorgan 32 fließenden elektrischen Stroms ermittelt werden.

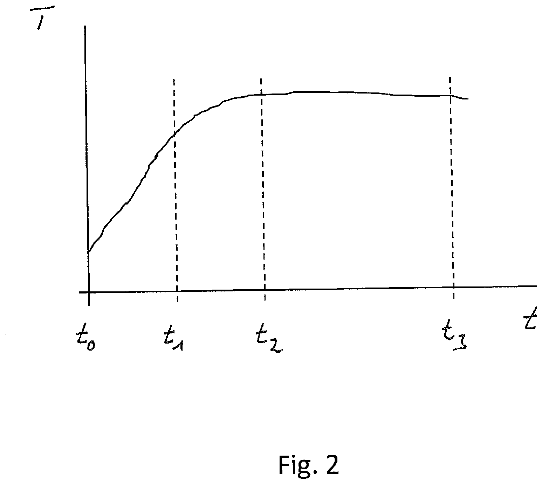

Mit Bezug auf die Fig. 2 wird nachfolgend der Betrieb des Fahrzeugheizgeräts 10 beschrieben. Die Fig. 2 zeigt, aufgetragen über der Zeit t, die Entwicklung der Temperatur T des Zündorgans 32 während der Startphase des Verbrennungsbetriebs des Fahrzeugheizgeräts 10. Da im Allgemeinen das Zündorgan 32 einen oder mehrere Widerstandsleiter mit ohmschem Widerstandsverhalten umfasst, spiegelt der Verlauf der Temperatur T in Fig. 2 auch den Verlauf des elektrischen Widerstands des Zündorgans 32 wieder.

Es sei angenommen, dass zu einem Zeitpunkt to ein Startbefehl zum in Betrieb nehmen des Fahrzeugheizgeräts 10 erzeugt wird. Mit Erzeugung dieses Startbefehls oder mit vorbestimmter Verzögerung dazu wird in einer Vorwärmphase bzw. einer Vorglühphase das Zündorgan 32 vorzugsweise in einem Leistungsregelungs-Betriebsmodus betrieben. Dazu kann beispielsweise zum möglichst schnellen Erwärmen des Zündorgans 32 bis zu einem Zeitpunkt t₁ mit einer vergleichsweise hohen Soll-Leistung im Bereich von etwa 115 W bis 120 W gearbeitet werden. Ab dem Zeitpunkt t₁ kann mit etwas geringerer Soll-Leistung im Bereich von etwa 110 W gearbeitet werden, um zu verhindern, dass die Temperatur des Zündorgans 32 dessen zulässige maximale Betriebstemperatur übersteigt. Diese kann zum Beispiel in einem Bereich von 1300 °C bis 1350 °C liegen.

Die Vorwärmphase, also die Zeitdauer bis zu einem Zeitpunkt t₂, kann über eine fest vorgegebene Zeitdauer mit fest vorgegebener, gegebenenfalls auch von der Umgebungstemperatur oder anderen Einflussgrößen abhängig variierender Soll-Leistung ablaufen. Im Verlaufe dieser Vorwärmphase kann bereits auch die Verbrennungsluftzuführanordnung 26 in Betrieb genommen werden. Am Ende der Vorwärmphase kann davon ausgegangen werden, dass durch ausreichende Erwärmung des Zündorgans 32 in dessen Umgebung eine ausreichend hohe Temperatur vorhanden ist, welche das Zünden eines Gemisches aus Verbrennungsluft L und Brennstoff B gewährleistet.

Es tritt dann zum Zeitpunkt t₂ in eine Zündphase ein, deren Beginn dadurch definiert ist, dass der elektrische Widerstand des Zündorgans 32 ermittelt wird und unmittelbar mit Ermittlung dieses Widerstandes des Zündorgans 32, ausgehend von dem Leistungsregelungs-Betriebsmodus, in einen Widerstandsregelungs-Betriebsmodus übergegangen wird. Der für diesen Widerstandsregelungs-Betriebsmodus als Soll-Widerstand heranzuziehende elektrische Widerstand des Zündorgans 32 wird auf der Grundlage des zum Zeitpunkt t₂ vorhandenen elektrischen Widerstandes festgelegt, der wiederum auf der Grundlage der am Zündorgan 32 anliegenden Spannung bzw. effektiven Spannung und des durch das Zündorgan 32 fließenden elektrischen Stroms bestimmt werden kann. Der Soll-Widerstand entspricht diesem zum Zeitpunkt t₂ ermittelten elektrischen Widerstand des Zündorgans 32.

Ab dem Zeitpunkt t₂ wird durch die dann ablaufende Widerstandsregelung der elektrische Widerstand und somit auch die Temperatur des Zündorgans 32 auf einem dem Soll-Widerstand entsprechenden Wert gehalten. Da durch die in der Vorwärmphase ablaufende Leistungsregelung dafür gesorgt werden kann, dass das Zündorgan 32 bis nahe an seine zulässige maximale Betriebstemperatur herangebracht wird, wird auch in der Zündphase, also ab dem Zeitpunkt t₂, die Temperatur des Zündorgans 32 in einem Bereich nahe, aber unter der maximal zulässigen bzw. der für den Zündvorgang angestrebten Temperatur gehalten.

Bei einer nicht erfindungsgemäßen Vorgehensweise kann gleichzeitig mit dem Eintritt in die Zündphase, also zum Zeitpunkt t₂, die Brennstoffzuführanordnung 22 aktiviert werden, um somit gleichzeitig mit dem Beginn der Widerstandsregelung des Zündorgans 32 auch zu beginnen, Brennstoff B in die Brennkammer 16 einzuleiten. Somit ist gewährleistet, dass kurz nach dem Eintritt in die Zündphase durch das Bereitstellen von Brennstoff B in dem porösen Verdampfermedium 20 Brennstoffdampf in die Brennkammer 16 austritt, sich mit der darin vorhandenen Verbrennungsluft L durchmischt und durch das Zündorgan 32 gezündet wird.

Bei einer erfindungsgemäßen Vorgehensweise wird bereits vordem Übergang in den Widerstandsregelungs-Betriebsmodus begonnen, durch Aktivierung der Brennstoffzuführanordnung 22 Brennstoff B in das poröse Verdampfermedium 20 bzw. in die Brennkammer 16 einzuspeisen. Es kann beispielsweise vorgesehen sein, dass die Brennstoffzufuhr eine vorbestimmte Zeitdauer nach dem Erzeugen des Startbefehls, also nach dem Zeitpunkt t₀, gestartet wird, und dass eine weitere vorbestimmte Zeitdauer nach dem Starten der Brennstoffzufuhr in den Widerstandsregelungs-Betriebsmodus übergegangen wird, also in die Zündphase eingetreten wird. Diese weitere vorbestimmte Zeitdauer ist vorzugsweise so zu wählen, dass zum Zeitpunkt des Eintritts in die Zündphase eine Zündung im Wesentlichen noch nicht aufgetreten ist und somit der Soll-Widerstand in einem Zustand bestimmt bzw. festgelegt werden kann, in welchem ein externer Wärmeeintrag in das Zündorgan 32 im Wesentlichen noch nicht stattfindet.

Bei einer weiteren nicht erfindungsgemäßen Vorgehensweise kann die Brennstoffzuführanordnung 22 eine vorbestimmte Zeitdauer, nachdem in den Widerstandsregelungs-Betriebsmodus eingetreten worden ist, aktiviert werden, um somit zu gewährleisten, dass zu dem Zeitpunkt, zu dem tatsächlich die Brennstoffzufuhr in die Brennkammer 16 beginnt, die Temperatur des Zündorgans 32 sich stabilisiert hat.

In der Zündphase wird das in der Brennkammer 16 vorhandene Gemisch aus Brennstoff B und Verbrennungsluft L gezündet, so dass die Verbrennung in der Brennkammer 16 beginnt. Durch diese Verbrennung wird Wärme bereitgestellt und auch in das Zündorgan 32 eingetragen. Würde die Heizleistung des Zündorgans 32 unverändert bleiben, hätte dies eine zusätzliche Erwärmung des Zündorgans 32 zur Folge, mit der Gefahr, dass dieses seine maximal zulässige Betriebstemperatur überschreiten könnte. Da jedoch erfindungsgemäß eine Widerstandsregelung und somit auch eine Temperaturregelung des Zündorgans 32 erfolgt, wird mit zunehmendem Eintrag von externer Energie in das Zündorgan 32 dessen Heizleistung verringert, um somit die Temperatur und damit den elektrischen Widerstand im Wesentlichen konstant zu halten.

Wird im Verlaufe der Zündphase die elektrische Leistung des Zündorgans 32 beobachtet, so kann durch Vergleich mit einer Referenz-Leistung erkannt werden, wann in der Brennkammer 16 eine ausreichend starke Verbrennung vorhanden ist bzw. die Verbrennung sich so stabilisiert hat, dass ein substantieller Rückgang der Heizleistung des Zündorgans 32 erforderlich ist, um einen Temperaturanstieg zu vermeiden. Als Referenz-Leistung kann beispielsweise eine auf der Grundlage der zum Eintritt in die Zündphase, also zum Zeitpunkt t₂ vorhandenen elektrischen Leistung des Zündorgans 32 bestimmte Leistung herangezogen werden. Beispielsweise könnte die Referenz-Leistung als ein bestimmter Prozentsatz, beispielsweise 50 %, der Leistung zum Zeitpunkt t₂ bestimmt werden. Unterschreitet die Heizleistung diesen Wert, kann dies als Indikator für eine ausreichend stabile Verbrennung herangezogen werden und dementsprechend die Erregung des Zündorgans 32 z. B. zu einem Zeitpunkt t₃ beendet werden. Auch könnte die zeitliche Änderung, also der zeitliche Gradient der Leistung des Zündorgans 32 beobachtet werden, und dann, wenn dieser eine bestimmte Referenz überschreitet, also ein starker Abfall der Leistung beobachtet wird, auf das Auftreten der Verbrennung geschlossen werden. Die Beobachtung der Leistung des Zündorgans 32 kann zumindest in dieser Phase die Funktionalität des Flammfühlers 44 übernehmen. Da das Zündorgan 32 diese Information unmittelbar in einem Bereich erfasst bzw. bereitstellt, in welchem die Verbrennung abläuft, kann somit wesentlich schneller auf das Auftreten der Verbrennung reagiert werden, beispielsweise die Erregung des Zündorgans 32 eingestellt werden bzw. auch die Erregung der während der Startphase zur Unterstützung der Brennstoffabdampfung auch aktivierten Heizanordnung 24 beendet werden.

Die vorangehend beschriebene Vorgehensweise kann in besonders vorteilhafter Weise eingesetzt werden, wenn das Zündorgan 32, so wie in Fig. 1 dargestellt, ausgehend von der Umfangswandung 40 sich im Wesentlichen parallel zu der der Brennkammer 16 zugewandten Seite 42 des porösen Verdampfermediums 20 erstreckt. Da bei derartiger Anordnung des Zündorgans 32 tatsächlich nur ein kleiner Teil der von diesem abgestrahlten Energie genutzt werden kann, um Zündbedingungen zu schaffen bzw. das Brennstoff/Luft-Gemisch zu zünden, es ist zum Erhalt einer möglichst kurzen Zeitdauer der Startphase vorteilhaft und mit der erfindungsgemäßen Vorgehensweise auch möglich, das Zündorgan 32 nahe bei seiner maximal zulässigen Betriebstemperatur zu betreiben, ohne dass die Gefahr einer Überhitzung besteht, obwohl das Zündorgan 32 bei ablaufender Verbrennung sich unmittelbar in dem Bereich befinden wird, in welchem sehr hohe Verbrennungstemperaturen auftreten werden. Gleichwohl kann die erfindungsgemäße Vorgehensweise auch angewandt werden bei einem Fahrzeugheizgerät, bei welchem das Zündorgan in einem von der Umfangswandung 40 sich weg erstreckenden, rohrartigen Ansatz aufgenommen ist, in welchem es den hohen Verbrennungstemperaturen nicht unmittelbar ausgesetzt ist. Auch bei derartiger Ausgestaltung ist es vorteilhaft, unter Heranziehung des erfindungsgemäßen Verfahrens das Zündorgan möglichst schnell auf sehr hohe Temperatur zu bringen und stabil bei dieser Temperatur halten zu können. Auch kann die erfindungsgemäße Vorgehensweise Anwendung finden bei einem brennstoffbetriebenen Fahrzeugheizgerät, das mehrere Zündorgane aufweist, die beispielsweise gleichzeitig aktiviert werden können, um die Verbrennung in einer Brennkammer zu starten.

## Patentansprüche

1. Verfahren zum Betreiben eines brennstoffbetriebenen Fahrzeugheizgerätes (10) während einer Startphase des Verbrennungsbetriebs, wobei das Fahrzeugheizgerät (10) einen Brennerbereich (12) mit einer Brennkammer (16), eine Brennstoffzuführanordnung (22) zum Zuführen von Brennstoff (B) zu dem Brennerbereich (12), eine Verbrennungsluftzuführanordnung (26) zum Zuführen von Verbrennungsluft (L) zu dem Brennerbereich (12) sowie wenigstens ein elektrisch erregbares Zündorgan (32) zum Zünden eines in der Brennkammer (16) gebildeten Brennstoff/Luft-Gemisches umfasst, wobei das Verfahren die Maßnahmen umfasst:
a) Erregen des Zündorgans (32) in einer Vorwärmphase, vor Beginn der Brennstoffzufuhr,
b) bei Eintritt in eine auf die Vorwärmphase folgende Zündphase, Erfassen des elektrischen Widerstandes des Zündorgans (32) und Bestimmen eines Soll-Widerstandes auf der Grundlage des bei Eintritt in die Zündphase erfassten elektrischen Widerstandes des Zündorgans (32),
c) in der Zündphase, Betreiben des Zündorgans (32) in einem Widerstandsregelungs-Betriebsmodus derart, dass ein Ist-Widerstand des Zündorgans (32) auf einem dem bei der Maßnahme b) bestimmten Soll-Widerstandes des Zündorgans (32) entsprechenden Wert gehalten wird,
**dadurch gekennzeichnet, dass** die Brennstoffzuführanordnung (22) in der Vorwärmphase eine vorbestimmte Zeitdauer vor Eintritt in die Zündphase aktiviert wird zum Fördern von Brennstoff (B) zu dem Brennerbereich (12).

2. Verfahren nach Anspruch 1, **dadurch gekennzeichnet, dass** bei der Maßnahme a) das Zündorgan (32) in der Vorwärmphase in einem Leistungsregelungs-Betriebsmodus betrieben wird.

3. Verfahren nach Anspruch 2, **dadurch gekennzeichnet, dass** bei der Maßnahme a) für die Vorwärmphase wenigstens eine Soll-Leistung für das Zündorgan (32) vorgegeben wird, und dass in der Vorwärmphase das Zündorgan (32) derart betrieben wird, dass eine Ist-Leistung auf einem der Soll-Leistung entsprechenden Wert gehalten wird.

4. Verfahren nach einem der vorangehenden Ansprüche, **dadurch gekennzeichnet, dass** in der Zündphase eine/ die Ist-Leistung des Zündorgans (32) mit einer Referenz-Leistung verglichen wird, und dass dann, wenn die Ist-Leistung im Bereich der Referenz-Leistung ist oder unter die Referenz-Leistung fällt, eine Verbrennung in der Brennkammer (16) erkannt wird.

5. Verfahren nach Anspruch 4, **dadurch gekennzeichnet, dass** dann, wenn in der Brennkammer (16) eine Verbrennung erkannt wird, das Erregen des Zündorgans (32) beendet wird.

6. Brennstoffbetriebenes Fahrzeugheizgerät, wobei das Fahrzeugheizgerät zur Durchführung eines Verfahrens nach einem der vorangehenden Ansprüche ausgebildet ist, und wobei das Fahrzeugheizgerät die in Anspruch 1 aufgeführten Komponenten sowie eine Ansteueranordnung (38) zum Ansteuern des Zündorgans (32), der Brennstoffzuführanordnung (22) und der Verbrennungsluftzuführanordnung (26) umfasst, und wobei die Ansteueranordnung (38) zur Durchführung der Maßnahmen eines Verfahrens nach einem der vorangehenden Ansprüche ausgebildet und konfiguriert ist.

7. Fahrzeugheizgerät nach Anspruch 6, **wobei** der Brennerbereich (12) ein topfartiges Brennkammergehäuse (14) mit einem von einem porösen Verdampfermedium (20) wenigstens bereichsweise überdeckten Bodenbereich (18) und einer Umfangswandung (40) umfasst, wobei das Zündorgan (32) an der Umfangswandung (40) getragen ist und sich in Abstand von dem porösen Verdampfermedium (20) in die Brennkammer (16), vorzugsweise im Wesentlichen parallel zu einer der Brennkammer (16) zugewandten Seite (42) des porösen Verdampfermediums (20), erstreckt.

## Claims

1. Method for operating a fuel-operated vehicle heating device (10) during a start phase of the combustion operation, wherein the vehicle heating device (10) comprises a burner area (12) with a combustion chamber (16), a fuel feed device (22) for supplying fuel (B) to the burner area (12), a combustion air feed device (26) for supplying combustion air (L) to the burner area, as well as at least one electrically energizable ignition element (32) for igniting a fuel/air mixture formed in the combustion chamber (16), the method comprising the actions of:
a) energizing the ignition element (32) in a preheating phase prior to the beginning of the fuel supply,
b) detecting the electrical resistance of the ignition element (32) and determining a desired resistance on the basis of the electrical resistance of the ignition element (32) detected at the time of entry into the ignition phase,
c) operating the ignition element (32) in a resistance-regulating operating mode during the ignition phase such that an actual resistance of the ignition element (32) is kept in the range of the desired resistance value of the ignition element (32) determined in action b),
**characterized in that** during the preheating phase the fuel feed device (22) is activated at a predefined time prior to the entry into the ignition phase for feeding fuel (B) to the burner area (12).

2. Method in accordance with claim 1, **characterized in that** in action a), the ignition element (32) is operated in the preheating phase in an output-regulating operating mode.

3. Method in accordance with claim 2, **characterized in that** in action a), at least one desired output is predefined for the ignition element (32) for the preheating phase and that the ignition element (32) is operated in the preheating phase such that an actual output is kept in the range of the desired output.

4. Method in accordance with one of the above claims, **characterized in that** an/the actual output of the ignition element (32) is compared with a reference output in the ignition phase and that when the actual output is in the range of the reference range or drops below the reference range, combustion is detected in the combustion chamber (16).

5. Method in accordance with claim 4, **characterized in that** the energization of the ignition element (32) is ended when combustion is detected in the combustion chamber (16).

6. Fuel-operated vehicle heating device,
**wherein** the vehicle heating device is adapted for realizing a method according to one of the preceding claims, and wherein
the vehicle heating device comprises the components described in claim 1 as well as an actuating device (38) for actuating the ignition element (32) of the fuel feed device (22) and the combustion air feed device (26), and wherein the actuating device (38) is configured to carry out the measures of a method in accordance with one of the above claims.

7. Vehicle heating device in accordance with claim 6, **wherein** the burner area (12) comprises a pot-shaped combustion chamber housing (14) with a bottom area (18) covered by a porous evaporator medium (20) in at least some areas and a circumferential wall (40), wherein the ignition element (32) is carried on the circumferential wall (40) and extends at a spaced location from the porous evaporator medium (20) into the combustion chamber (16), preferably essentially parallel to a side (42) of the porous evaporator medium (20) facing the combustion chamber (16).

## Revendications

1. Procédé pour opérer un appareil de chauffage de véhicule (10) fonctionnant au combustible pendant une phase initiale de l'opération de combustion, l'appareil de chauffage de véhicule (10) comprenant une zone de brûleur (12) avec une chambre de combustion (16), un dispositif d'alimentation en combustible (22) pour fournir du combustible (B) à la zone de brûleur (12), un dispositif d'alimentation en air de combustion (26) pour fournir de l'air de combustion (L) à la zone de brûleur, ainsi qu'au moins un élément d'allumage (32) pouvant être excité électriquement pour l'allumage d'un mélange combustible/air formé dans la chambre de combustion (16), le procédé comprenant les actions suivantes
a) exciter l'élément d'allumage (32) dans une phase de préchauffage avant le début de l'alimentation en combustible,
b) détecter la résistance électrique de l'élément d'allumage (32) et déterminer une résistance désirée sur la base de la résistance électrique de l'élément d'allumage (32) détectée au moment de l'entrée dans la phase d'allumage,
c) opérer l'élément d'allumage (32) dans un mode de fonctionnement à régulation de résistance pendant la phase d'allumage de telle sorte qu'une résistance réelle de l'élément d'allumage (32) soit maintenue dans la plage de la valeur de résistance désirée de l'élément d'allumage (32) déterminée dans l'action b),
**caractérisé en ce que** pendant la phase de préchauffage le dispositif d'alimentation en combustible (22) est activé à un moment prédéterminé avant l'entrée dans la phase d'allumage pour fournir du combustible (B) à la zone de brûleur (12).

2. Procédé selon la revendication 1, **caractérisé en ce que** dans l'action a), l'élément d'allumage (32) est actionné dans la phase de préchauffage dans un mode de fonctionnement à régulation de puissance.

3. Procédé selon la revendication 2, **caractérisé en ce que** dans l'action a), au moins une puissance désirée est prédéterminée pour l'élément d'allumage (32) pour la phase de préchauffage et que l'élément d'allumage (32) est opéré dans la phase de préchauffage de telle sorte qu'une puissance réelle se trouve dans la plage de la puissance désirée.

4. Procédé selon l'une des revendications ci-dessus, **caractérisé en ce qu'**une/la puissance réelle de l'élément d'allumage (32) est comparée à une puissance de référence dans la phase d'allumage et que lorsque la puissance réelle se situe dans la plage de la puissance de référence ou tombe en dessous de la puissance de référence, une combustion est détectée dans la chambre de combustion (16).

5. Procédé selon la revendication 4, **caractérisé en ce que** l'excitation de l'élément d'allumage (32) est terminée lorsque la combustion est détectée dans la chambre de combustion (16).

6. Dispositif de chauffage de véhicule à combustible,
dans lequel le dispositif de chauffage de véhicule est adapté pour réaliser une méthode selon l'une des revendications précédentes, et dans lequel
le dispositif de chauffage de véhicule comprend les composants décrits dans la revendication 1 ainsi que
un dispositif d'actionnement (38) pour actionner l'élément d'allumage (32) du dispositif d'alimentation en combustible (22) et du dispositif d'alimentation en air de combustion (26), et dans lequel le dispositif d'actionnement (38) est configuré pour effectuer les mesures d'une méthode conformément à l'une des revendications ci-dessus.

7. Dispositif de chauffage de véhicule selon la revendication 6, dans lequel la zone de brûleur (12) comprend un boîtier de chambre de combustion (14) en forme de pot avec une zone de fond (18) recouverte au moins par endroits par un médium d'évaporation poreux (20) et une paroi circonférentielle (40), dans lequel l'élément d'allumage (32) est porté sur la paroi circonférentielle (40) et s'étend espacé du médium d'évaporation poreux (20) dans la chambre de combustion (16), de préférence essentiellement parallèlement à un côté (42) du médium d'évaporation poreux (20) tourné vers la chambre de combustion (16).
